# FASCICULE DE BREVET EUROPEEN

(11) **EP 2 801 707 B1**
(45) Date de publication et mention de la délivrance du brevet: **05.07.2017**
(21) Numéro de dépôt: 13167305.5
(22) Date de dépôt: 10.05.2013
(51) Int. Cl.: F01M 1/00, F01D 25/18, F01D 25/20, F16N 23/00

(54) **Circuit de lubrification de turbomachine avec vanne anti-siphon pour windmilling**
Schmierkreislauf eines Turbotriebwerks mit Überlaufventil für Windmilling
Turbomachine lubrication circuit with anti-siphon valve for windmilling

(43) Date de publication de la demande: 12.11.2014
(73) Titulaire: Safran Aero Boosters SA, 4041 Herstal (BE)
(72) Inventeur: Cornet, Albert, 4800 Verviers (BE); Raimarckers, Nicolas, 4263 Tourinne (Braives) (BE)
(74) Mandataire: Lecomte & Partners

(56) Documents cités:
- EP-A1- 1 130 221
- EP-A2- 1 722 074
- FR-A1- 2 960 022
- GB-A- 2 472 445
- US-A- 5 687 561

## Description

### Domaine technique

L'invention a trait à un circuit d'alimentation en huile de turbomachine d'un aéronef. Plus précisément, l'invention a trait à un ou plusieurs circuits hydrauliques servant à actionner, à refroidir et/ou à lubrifier des organes d'une turbomachine d'un aéronef. L'invention a également trait à une turbomachine selon l'invention.

### Technique antérieure

Une turbomachine emploie de l'huile pour différentes fonctions. Cette huile peut servir à la fois à lubrifier des pièces mécaniques en mouvement et à les refroidir. L'huile peut également servir à actionner ou à alimenter des organes grâce à sa pression. Par exemple, elle peut être employée pour régler le pas d'aubes de la soufflante d'un turbopropulseur ou pour amortir les mouvements transférés par les roulements (squeeze film). L'huile peut également servir à réchauffer ou refroidir certaines parties du turbopropulseur ou même de l'aéronef.

Pour remplir ces fonctions, l'huile est canalisée dans un circuit muni d'une pompe assurant sa circulation. Puisque différents organes sont couramment reliés au circuit, on dispose généralement plusieurs pompes sur le circuit. Chacune d'elles permet de délivrer ou de récupérer l'huile à des débits et/ou des pressions différentes de sorte à alimenter individuellement des organes ou groupes d'organes. Avantageusement, ces pompes sont entraînées par une prise de puissance extraite de l'arbre de la turbomachine afin d'en simplifier l'entraînement.

Ce mode d'entraînement assure une circulation d'huile dans un turbopropulseur d'aéronef, même lorsqu'il est coupé mais que son rotor tourne encore. En vol, l'aéronef peut assurer la mission en coupant l'alimentation en carburant d'un de ses moteurs. Le souffle d'air qui s'y engouffre de par la vitesse de l'avion parvient à faire tourner le fan et donc les pompes qui y sont couplées.

Par ailleurs, un aéronef doit obéir à des règles de sécurité concernant les incendies moteurs. Le circuit doit pouvoir couper la circulation d'huile là où elle est susceptible d'alimenter l'incendie, et autoriser la circulation dans les organes nécessitant une lubrification ou une énergie mécanique. La circulation d'huile reste bénéfique dans certains organes qu'elle peut refroidir jusqu'à un certain point.

Afin d'assurer ces modes de fonctionnement, des vannes commandées sont associées aux différentes pompes. Cependant, le nombre d'organes à traiter, ainsi que les différents modes à prendre en compte imposent un nombre important de vannes commandées, ainsi qu'une multitude de commandes et de capteurs. Leur nombre augmente le coût d'un tel circuit d'huile, et sa fiabilité s'affaiblit.

Le document GB 2 042 649 A présente un système d'alimentation en huile des paliers d'une turbomachine. Les paliers sont alimentés directement ou via un distributeur d'où partent des boucles parallèles. L'huile des paliers est aspirée grâce à des pompes, puis est envoyée dans une boîte de vitesse auxiliaire. Le système présente plusieurs clapets anti-retour dont un qui est placé en amont du distributeur. Différentes pompes aspirent ou injectent l'huile dans les paliers. Une conduite de dérivation avec un clapet programmé permet une alimentation directe d'une boîte de vitesse auxiliaire lorsque la turbomachine est au ralenti et que le clapet anti-retour est fermé. Le système permet de commander une circulation d'huile dans des conditions précises. Il nécessite néanmoins des moyens de commande complexes.

Le document US2008/0178833 A1 divulgue un système de lubrification de turbomachine. Il présente une pompe d'alimentation en huile d'organes de la turbomachine et une pompe de récupération de l'huile desdits organes, ces deux pompes étant couplées à l'arbre du rotor. Par mesure de sécurité, le circuit est pourvu de clapets tarés placés à la sortie de chacune des pompes. Ils sont configurés pour couper le débit d'huile en cas de windmilling. Le système comprend également une boucle de dérivation vers le réservoir de l'huile en sortie de pompe d'alimentation. La sécurité de ce système en cas de windmilling repose sur les clapets tarés, ces derniers étant sujets à l'attaque des flammes en cas d'incendie de la turbomachine. De plus, ce système ne permet pas de répondre aux besoins particuliers de certains organes en termes de sécurité, ces organes devant rester alimentés en huile en cas de windmilling.

### Résumé de l'invention

### Problème technique

L'invention a pour objectif de résoudre au moins un des problèmes techniques posés par l'art antérieur. L'invention a également pour objectif d'améliorer la sécurité de fonctionnement d'un système d'alimentation d'huile d'une turbomachine. L'invention a également pour objectif de simplifier le fonctionnement d'un système d'alimentation d'huile d'une turbomachine tout en conservant un niveau de sécurité donné.

### Solution technique

L'invention a pour objet un système d'alimentation en huile d'une turbomachine comprenant: un réservoir apte à contenir un volume d'huile; une pompe d'alimentation d'au moins un organe de la turbomachine, ladite pompe étant en communication avec le réservoir et le ou lesdits organes; des moyens de fermeture du débit de la pompe d'alimentation vers le ou les organes lorsque le régime de la pompe est inférieur à un régime R1; remarquable en ce que les moyens de fermeture sont disposés hydrauliquement en amont de la pompe, entre ladite pompe et le réservoir.

Selon un mode avantageux de l'invention, les moyens de fermeture comprennent un clapet anti-siphon configuré pour se fermer lorsque la dépression d'aspiration de la pompe d'alimentation est inférieure à un seuil donné.

Selon un mode avantageux de l'invention, le système comprend un échangeur de chaleur tel un refroidisseur qui est apte à contenir un volume d'huile, préférentiellement le refroidisseur forme essentiellement une enceinte close.

Selon un mode avantageux de l'invention, les moyens de fermeture sont logés dans le réservoir. Le réservoir peut être configuré de sorte à ce que la vanne puisse être immergée dans l'huile du réservoir.

Selon un mode avantageux de l'invention, les moyens de fermeture sont commandés mécaniquement par la dépression d'aspiration de la pompe d'alimentation et préférentiellement également par la pression dans le réservoir.

Selon un mode avantageux de l'invention, la pompe est une première pompe, les moyens de fermeture sont des premiers moyens de fermeture; le système comprenant, en outre, une deuxième pompe d'alimentation dont l'entraînement mécanique est couplé à celui de la première pompe, et en communication avec le réservoir et un ou plusieurs autres organes de la turbomachine, des deuxièmes moyens de fermeture du débit de la deuxième pompe d'alimentation lorsque le régime de la première pompe d'alimentation devient inférieur à un régime R2, lesdits moyens étant disposés en amont de ladite pompe, le régime R2 étant différent du régime R1.

Selon un mode avantageux de l'invention, les régimes R1 et R2 sont des valeurs prédéterminées.

Selon un mode avantageux de l'invention, les régimes R1 et R2 diffèrent de plus de 5%, préférentiellement de plus de 10%, plus préférentiellement de plus de 30%, encore plus préférentiellement de plus de 100%.

Selon un mode avantageux de l'invention, la ou les pompes d'alimentation présentent des fuites internes aptes à réduire sa ou leur dépression d'aspiration lorsque les moyens de fermeture correspondants coupent le débit.

Selon un mode avantageux de l'invention, le système comprend un conduit de commande reliant la sortie de la ou d'une des pompes d'alimentation aux moyens de fermeture correspondants de manière à permettre un débit d'huile lorsque la pression de sortie de ladite pompe dépasse une pression P1.

L'invention a également pour objet un turboréacteur comprenant des organes et un système d'alimentation en huile, remarquable en ce que le système d'alimentation est conforme à l'invention.

Selon un mode avantageux de l'invention, le turboréacteur comprend un fan dont l'entraînement est couplé à celui de la ou une des pompes d'alimentation, le fan tournant et entraînant en rotation ladite pompe d'alimentation à un régime R3 lorsque le turboréacteur est en vol et non alimenté en carburant, correspondant à un mode d'autorotation en vol, le régime R3 étant inférieur au régime R1, de manière à ce que la ou les pompes d'alimentation ne débitent pas lorsque le turboréacteur est en mode d'autorotation en vol.

Selon un mode avantageux de l'invention, la pompe est une première pompe, les moyens de fermeture sont des premiers moyens de fermeture; le système comprenant, en outre, une deuxième pompe d'alimentation dont l'entraînement mécanique est couplé à celui de la première pompe, et en communication avec le réservoir et un ou plusieurs autres organes de la turbomachine, des deuxièmes moyens de fermeture du débit de la deuxième pompe d'alimentation lorsque le régime de la première pompe d'alimentation devient inférieur à un seuil R2, lesdits moyens étant disposés en amont de ladite pompe, le régime R2 étant différent du régime R1, le turboréacteur étant remarquable en ce qu'il comprend un fan dont l'entraînement est couplé à celui des première et deuxième pompes d'alimentation, le fan tournant et entraînant en rotation la première pompe d'alimentation à un régime R3 de la première pompe d'alimentation lorsque le turboréacteur est en vol et non alimenté en carburant, correspondant à un mode d'autorotation en vol, le régime R3 étant compris entre les régimes R1 et R2, de manière à ce que l'une des première et deuxième pompes d'alimentation débite vers son ou ses organes correspondants et l'autre desdites pompes ne débite pas lorsque le turboréacteur est en mode d'autorotation en vol.

Selon un mode avantageux de l'invention, le régime d'entraînement R3 est inférieur à 50%, préférentiellement 30%, plus préférentiellement 10% du régime d'entraînement lorsque le turboréacteur est à un régime nominal de fonctionnement.

Selon un mode avantageux de l'invention, le régime R3 est une plage de valeurs.

Selon un mode avantageux de l'invention, le ou les organes alimentés par la ou les pompes d'alimentation comprennent au moins une enceinte de lubrification de palier de rotor.

Selon un mode avantageux de l'invention, le système d'alimentation d'huile comprend, en outre, une boucle de récupération d'huile du ou d'au moins un des organes, la boucle étant dotée d'une pompe de récupération dont l'entraînement est préférentiellement couplé à celui de la ou des pompes d'alimentation.

Selon un mode avantageux de l'invention, le système d'alimentation d'huile comprend un canal de commande reliant la boucle de récupération en aval de la pompe de récupération avec les moyens de fermeture correspondants, lesdits moyens étant configurés pour permettre un débit d'huile lorsque la pression dans le canal de commande (38) est supérieure à une pression P2.

L'invention a également trait à un aéronef comportant un système d'alimentation en huile et/ou un turboréacteur, remarquable en ce que le système d'alimentation en huile est conforme à l'invention et/ou le turboréacteur est conforme à l'invention.

### Avantages apportés

Le système d'alimentation est autonome et agit de manière automatique. Les actionnements sont très brefs et particulièrement sûrs.

L'invention permet de pouvoir couper ou ouvrir la circulation d'huile dans le système d'alimentation avec des moyens de fermeture simples. L'ouverture du passage au niveau des moyens de fermeture s'effectue en fonction de la vitesse de rotation d'une pompe et donc du fan, ce qui permet de corréler simplement l'ouverture à des conditions réelles de fonctionnement du turboréacteur.

L'invention permet de piloter simplement plusieurs moyens de fermeture. En cas de windmilling et d'incendie, le système d'alimentation présente plusieurs modes de fonctionnement en fonction de la vitesse de rotation du fan. Il permet à la fois de lubrifier des paliers et de couper la circulation là où une fuite peut apparaître.

Ce résultat est atteint sans moyens de commande externes. Il permet évidement de couper toute circulation lorsque le turboréacteur est à l'arrêt total, et autorise une circulation totale lorsque le turboréacteur fonctionne à des vitesses conventionnelles. Le système coupe l'alimentation là où elle devient dangereuse, et la maintient là où elle reste nécessaire.

### Brève description des dessins

La figure 1 représente une turbomachine axiale selon l'invention.
La figure 2 est un schéma d'un système d'alimentation de turbomachine selon un premier mode de réalisation de l'invention.
La figure 3 illustre un système d'alimentation de turbomachine selon un deuxième mode de réalisation de l'invention.

### Description des modes de réalisation

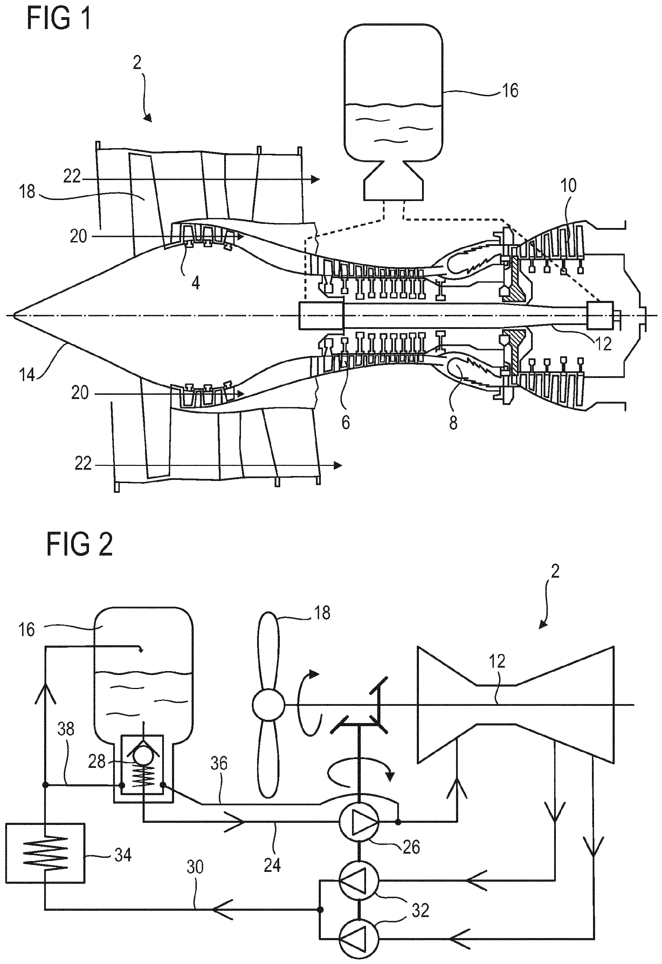

La figure 1 schématise une turbomachine axiale. Il s'agit dans ce cas précis d'un turboréacteur 2 double-flux qui est destiné à être monté sur un véhicule tel un aéronef. La turbomachine peut également être un turbopropulseur. Le turboréacteur 2 comprend un premier niveau de compression, dit compresseur basse-pression 4, un deuxième niveau de compression, dit compresseur haute-pression 6, une chambre de combustion 8 et un ou plusieurs niveaux de turbines 10. En fonctionnement, la puissance mécanique de la turbine 10 transmise via l'arbre central 12 jusqu'au rotor 14 met en mouvement les deux compresseurs 4 et 6. Des moyens de démultiplication peuvent augmenter ou réduire la vitesse de rotation transmise aux compresseurs. Ou encore, les différents étages de turbines peuvent chacun être reliés aux étages de compresseur via des arbres centraux concentriques.

L'arbre central 12 est monté tournant par rapport au carter du turboréacteur 2 à l'aide de paliers. Ces derniers peuvent comprendre des roulements qui doivent être lubrifiés. Ce besoin est aussi nécessaire pour les moyens de démultiplication. Pour répondre à ces besoins, le turboréacteur 2 comprend un système d'alimentation en huile qui distribue l'huile aux différents paliers et aux moyens de démultiplication.

Le système d'alimentation peut comprendre un échangeur thermique pour refroidir l'huile lors du fonctionnement. Un volume d'huile est stocké dans un réservoir 16. Cette huile peut alors servir à refroidir des organes du turboréacteur 2.

Un ventilateur d'entrée communément désigné fan 18 est couplé au rotor 14 et génère un flux d'air qui se divise en un flux primaire 20, et un flux secondaire 22. Le flux primaire 20 suit un cycle thermodynamique de compression détente. Le flux secondaire 22 apporte la majorité de la poussée du turboréacteur via le fan 18. Le fan 18 peut être relié à l'arbre central via une démultiplication qui est lubrifiée par le système d'alimentation. Son pas peut être réglable. Ce réglage peut être ajusté à l'aide de l'énergie mécanique de l'huile du système d'alimentation.

Le fan 18 est également capable de se comporter comme un récepteur d'énergie mécanique. En phase de vol, à une vitesse de croisière, le turboréacteur 2 peut être coupé et ne plus exercer de propulsion. En raison de la vitesse de l'aéronef, un souffle d'air peut faire tourner le fan 18. Celui-ci peut alors entraîner les organes et équipements qui y sont couplés. Ce mode de fonctionnement est communément appelé « windmilling », ou autorotation. De manière générale, la vitesse de rotation du fan 18 est alors inférieure à la moitié de sa vitesse de rotation en cas de fonctionnement au régime nominal du turboréacteur 2, préférentiellement inférieure au quart, plus préférentiellement inférieure au dixième.

La figure 2 est une représentation du turboréacteur 2 avec un système d'alimentation en huile suivant un premier mode de réalisation de l'invention.

L'huile est acheminée depuis le réservoir 16 jusqu'à différents organes du turboréacteur 2 via une première branche 24 d'alimentation. Les organes peuvent comprendre une enceinte de lubrification d'un palier et un échangeur de chaleur. Le système comprend une première pompe d'alimentation 26 placée sur la première branche 24 et qui aspire l'huile du réservoir 16. Les pressions d'aspiration et de refoulement de la pompe peuvent être déterminées en fonction de son régime. Il peut s'agir de sa vitesse de rotation dans le cas d'une pompe rotative, ou de sa fréquence dans le cas d'une pompe oscillante. Ces pressions dépendent également de de la viscosité de l'huile à une température donnée.

Le système d'alimentation comprend, en outre, des premiers moyens de fermeture, tel un clapet anti-siphon 28, apte à empêcher ou permettre la circulation d'huile du réservoir 16 vers les organes. Il peut être disposé au point bas du réservoir 16. Le clapet 28 est disposé en amont de la première pompe 26, et préférentiellement en amont de tout équipement ou organe relié à la première branche 24.

Le clapet anti-siphon 28 est taré de sorte à rester fermé en présence de la colonne d'huile formée dans le réservoir. A l'arrêt, il évite que le réservoir ne se vide dans le turboréacteur 2.

Le clapet 28 peut comprendre un opercule et un siège associé. Lorsque l'opercule est dans son siège, le clapet est fermé. Les moyens de fermeture peuvent comprendre des moyens de rappel ou des moyens de tarage permettant de ramener l'opercule vers son siège en une position fermée. Les moyens de tarage peuvent comprendre un ressort dont la précontrainte permet de maintenir l'opercule dans son siège tant qu'il reste soumis à un effort prédéterminé. Cet effort peut être traduit en une pression appliquée à l'opercule qui correspond à la pression d'ouverture de la vanne 28.

Le fonctionnement de la vanne 28 dépend donc de la différence de pression à laquelle elle est exposée. Cette différence de pression dépend essentiellement des pressions du réservoir 16, de la géométrie de la branche d'alimentation 24 et/ou de la pression d'aspiration de la première pompe 26. Cette dernière découle de son régime. Ainsi, il est permis de configurer l'ouverture du clapet en fonction de la vitesse de rotation du fan.

Après avoir atteint les organes, l'huile peut y rester ou s'écouler dans le carter du turboréacteur 2. Elle y est aspirée ou drainée selon le cas à l'aide d'une branche de récupération 30. Celle-ci peut comprendre une pompe de récupération 32 permettant d'aspirer l'huile puis de la rejeter dans le réservoir 16. Un échangeur de chaleur 34 peut être disposé en aval de la pompe de récupération 32. De la sorte, l'huile contenue dans le réservoir 16 reste à basse température par rapport à la température du turboréacteur 2. La branche de récupération 30 peut comprendre plusieurs ramifications dotées chacune d'une pompe de récupération afin d'aspirer l'huile en différents endroits, à différents débits.

La pompe d'alimentation 26 et la pompe de récupération 32 sont couplées mécaniquement, directement ou via des réducteurs. Elles sont également couplées au fan 18 directement ou via des réducteurs. Un arbre de transmission peut engrener l'arbre central 12 pour actionner les pompes. Ce choix d'entraînement simplifie le système puisqu'il ne nécessite pas d'énergie extérieure pour les actionner, ni de moyens de commande supplémentaires. La rotation du fan 18 et donc celle de l'arbre central 12 entraîne les pompes d'alimentation et de récupération (26, 32) lors du fonctionnement normal du turboréacteur 2. Si ce dernier vient à être coupé, un fonctionnement en windmilling peut se produire, dès lors le fan 18 peut entraîner les pompes (26, 32) ainsi que divers organes nécessitant une lubrification. Par couper le turboréacteur 2, on entend couper son alimentation en carburant.

Le clapet anti-siphon 28 est configuré pour s'ouvrir et permettre une circulation d'huile en cas de windmilling. De la sorte, l'huile peut être acheminée vers les organes nécessitant une lubrification en raison de leur mouvement. Le clapet 28 assure une double fonction puisqu'il coupe la circulation d'huile à l'arrêt total du turboréacteur 2, et la rouvre en cas de windmilling, lorsque la vitesse de rotation de la pompe dépasse un régime R1. En cas de windmilling, la vitesse de rotation du fan 18 est sensiblement inférieure à celle d'un régime de fonctionnement nominal.

L'invention peut donc se dispenser de moyens de commande complexes, coûteux, peu robustes.

Pour améliorer la fiabilité du système d'alimentation ou présenter un fonctionnement plus franc, il peut comprendre un conduit de commande 36 relié au refoulement de la pompe d'alimentation 26 et au clapet 28. Ses moyens de fermeture peuvent être configurés de sorte à permettre une circulation lorsque la pression de refoulement de la pompe d'alimentation 26 dépasse une pression P1. Ainsi, lorsque la vitesse de rotation du fan 18 est suffisante, le clapet 28 s'ouvre et autorise une alimentation en huile.

Dans la même optique, le système d'alimentation peut comprendre un canal de commande 38 reliant la boucle de récupération 30 au clapet 28. Le canal 38 est avantageusement disposé côté refoulement de la pompe de récupération 32 afin de pouvoir en exploiter la pression de refoulement. Celle-ci sera proportionnelle à la vitesse de rotation du fan 18. Les moyens de fermeture du clapet 28 peuvent être configurés de sorte à permettre une circulation d'huile lorsque la pression de refoulement de la pompe de récupération 32 dépasse une pression P2. Ainsi, lorsque la vitesse de rotation du fan 18 est suffisante, le clapet 28 s'ouvre et autorise une alimentation en huile. Les pressions P1 et P2 peuvent être différentes.

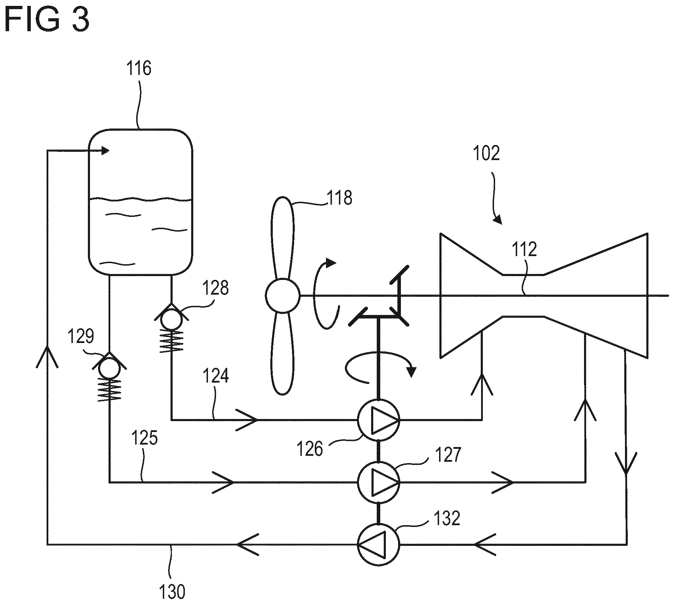

La figure 3 illustre un turboréacteur 2 avec un système d'alimentation en huile suivant un deuxième mode de réalisation de l'invention. Cette figure 3 reprend la numérotation des figures précédentes pour les éléments identiques ou similaires, la numération étant toutefois incrémentée de 100. Des numéros spécifiques sont utilisés pour les éléments spécifiques à ce mode de réalisation.

Le système d'alimentation comporte un réservoir 116, une première branche d'alimentation 124 et une deuxième branche d'alimentation 125. Elles sont toutes deux en communication avec le réservoir 116. La première branche d'alimentation 124 comprend un premier clapet 128 et une première pompe d'alimentation 126 en aval. La deuxième branche d'alimentation 125 comprend un deuxième clapet 129 et une deuxième pompe d'alimentation 127 en aval. Ces branches sont avantageusement parallèles. Elles alimentent chacune des organes différents. L'une peut par exemple alimenter un palier, l'autre un échangeur de chaleur.

Le système d'alimentation comporte une branche de récupération 130 dotée d'une pompe de récupération 132. Cette branche de récupération peut être divisée en amont et permet de collecter l'huile dans différents organes, à différents débits, à différentes pressions. Les pompes (126, 127, 132) sont couplées mécaniquement au fan 118 et sont donc susceptibles de provoquer une circulation d'huile en cas de windmilling.

Les clapets (128, 129) sont indépendants les uns des autres. Ils sont aptes à couper les circulations d'huile issues du réservoir 116 lorsque le turboréacteur 102 est à l'arrêt total. Le premier clapet 128 est configuré pour s'ouvrir lorsque le régime d'entraînement de la première pompe d'alimentation 126 dépasse un régime R1, le deuxième clapet 129 est configuré pour s'ouvrir lorsque le régime d'entraînement de la première pompe d'alimentation 126 dépasse un régime R2, c'est-à-dire pour des vitesses de rotation différentes du fan 118. Les régimes d'entraînement R1 et R2 peuvent différer de plus de 5%, préférentiellement de plus de 50%, plus préférentiellement de plus de 100%, encore plus préférentiellement de plus de 300%.

Ce système d'alimentation permet d'alimenter indépendamment différents organes grâce à la rotation du fan 118. L'un peut être privé d'alimentation tandis qu'un autre est alimenté. Cette configuration est particulièrement avantageuse en cas d'incendie moteur et de windmilling car le système d'alimentation permet, à titre d'exemple, d'alimenter un palier et de couper la circulation vers un échangeur thermique. En effet, lors de ce mode de fonctionnement plusieurs pièces sont en rotation et ont besoin d'être lubrifiées. De son côté, l'échangeur thermique peut être endommagé par l'incendie et risque de relâcher un volume important d'huile. Celui-ci représente un combustible pouvant aggraver l'incendie et endommager davantage l'aéronef. Le fait de pouvoir couper le débit d'huile de cet organe permet de maîtriser les risques.

Les clapets sont disposés dans le réservoir 116 ou à sa sortie. Ils sont disposés en amont de tout équipement ou organe. De la sorte, ils peuvent couper le débit dans des conduites pouvant être exposées à l'incendie. Elles ne libèrent ainsi pas d'huile si elles venaient à être endommagées. L'invention permet ainsi de couper le débit d'huile lorsque qu'il est insuffisant dans les conduites pour les refroidir et leur permettre de résister à l'incendie.

## Revendications

1. Système d'alimentation en huile d'une turbomachine (2 ; 102) comprenant :
- un réservoir (16 ; 116) apte à contenir un volume d'huile ;
- une pompe d'alimentation (26; 126; 127) d'au moins un organe de la turbomachine, ladite pompe étant en communication avec le réservoir (16 ; 116) et le ou lesdits organes ;
- des moyens de fermeture (28; 128; 129) du débit de la pompe d'alimentation (26 ; 126 ; 127) vers le ou les organes lorsque le régime de la pompe est inférieur à un régime R1 ;
**caractérisé en ce que** les moyens de fermeture sont disposés hydrauliquement en amont de la pompe, entre ladite pompe et le réservoir.

2. Système selon la revendication 1, **caractérisé en ce que** les moyens de fermeture comprennent un clapet anti-siphon (28 ; 128 ; 129) configuré pour se fermer lorsque la dépression d'aspiration de la pompe d'alimentation (26 ; 126 ; 127) est inférieure à un seuil donné.

3. Système selon l'une des revendications 1 à 2, **caractérisé en ce que** les moyens de fermeture (28) sont logés dans le réservoir (16).

4. Système selon l'une des revendications 1 à 3, **caractérisé en ce que** les moyens de fermeture (28 ; 128 ; 129) sont commandés mécaniquement par la dépression d'aspiration de la pompe d'alimentation (26; 126; 127) et préférentiellement également par la pression dans le réservoir (16 ; 116).

5. Système selon l'une des revendications 1 à 4, **caractérisé en ce que** la pompe est une première pompe (126), les moyens de fermeture sont des premiers moyens de fermeture (128) ; le système comprenant, en outre, une deuxième pompe d'alimentation (127) dont l'entraînement mécanique est couplé à celui de la première pompe (126), et en communication avec le réservoir (116) et un ou plusieurs autres organes de la turbomachine, des deuxièmes moyens de fermeture (129) du débit de la deuxième pompe d'alimentation (127) lorsque le régime de la première pompe d'alimentation devient inférieur à un régime R2, lesdits moyens étant disposés en amont de ladite pompe, le régime R2 étant différent du régime R1.

6. Système selon la revendication 5, **caractérisé en ce que** les régimes R1 et R2 diffèrent de plus de 5%, préférentiellement de plus de 10%, plus préférentiellement de plus de 30%, encore plus préférentiellement de plus de 100%.

7. Système selon l'une des revendications 1 à 6, **caractérisé en ce que** la ou les pompes d'alimentation (26 ; 126 ; 127) présentent des fuites internes aptes à réduire sa ou leur dépression d'aspiration lorsque les moyens de fermeture correspondants (28 ; 128 ; 129) coupent le débit.

8. Système selon l'une des revendications 1 à 7, **caractérisé en ce qu'**il comprend un conduit de commande (36) reliant la sortie de la ou d'une des pompes d'alimentation (26) aux moyens de fermeture correspondants (28) de manière à permettre un débit d'huile lorsque la pression de sortie de ladite pompe dépasse une pression P1.

9. Turboréacteur (2 ; 102) comprenant des organes et un système d'alimentation en huile, **caractérisé en ce que** le système d'alimentation est conforme à l'une des revendications 1 à 8.

10. Turboréacteur (2) selon la revendication 9, **caractérisé en ce qu'**il comprend un fan (18) dont l'entraînement est couplé à celui de la ou d'une des pompes d'alimentation (26), le fan (18) tournant et entraînant en rotation ladite pompe d'alimentation (26) à un régime R3 lorsque le turboréacteur est en vol et non alimenté en carburant, correspondant à un mode d'autorotation en vol, le régime R3 étant inférieur au régime R1, de manière à ce que la ou les pompes d'alimentation ne débitent pas lorsque le turboréacteur est en mode d'autorotation en vol.

11. Turboréacteur (102) selon la revendication 9, le système étant conforme à la revendication 5, **caractérisé en ce qu'**il comprend un fan (118) dont l'entraînement est couplé à celui des première et deuxième pompes d'alimentation (126; 127), le fan (118) tournant et entraînant en rotation la première pompe d'alimentation (126) à un régime R3 de la première pompe d'alimentation lorsque le turboréacteur est en vol et non alimenté en carburant, correspondant à un mode d'autorotation en vol, le régime R3 étant compris entre les régimes R1 et R2, de manière à ce que l'une des première et deuxième pompes d'alimentation débite vers son ou ses organes correspondants et l'autre desdites pompes ne débite pas lorsque le turboréacteur est en mode d'autorotation en vol.

12. Turboréacteur (2 ; 102) selon l'une des revendications 10 et 11, **caractérisé en ce que** le régime d'entraînement R3 est inférieur à 50%, préférentiellement 30%, plus préférentiellement 10% du régime d'entraînement lorsque le turboréacteur est à un régime nominal de fonctionnement.

13. Turboréacteur (2 ; 102) selon l'une des revendications 9 à 12, **caractérisé en ce que** le ou les organes alimentés par la ou les pompes d'alimentation (26 ; 126, 127) comprennent au moins une enceinte de lubrification de palier de rotor.

14. Turboréacteur (2 ; 102) selon l'une des revendications 9 à 13, **caractérisé en ce que** le système d'alimentation d'huile comprend, en outre, une boucle de récupération (30; 130) d'huile du ou d'au moins un des organes, la boucle étant dotée d'une pompe de récupération (32 ; 132) dont l'entraînement est préférentiellement couplé à celui de la ou des pompes d'alimentation.

15. Turboréacteur (2) selon la revendication 14, **caractérisé en ce que** le système d'alimentation d'huile comprend un canal de commande (38) reliant la boucle de récupération (30) en aval de la pompe de récupération avec les moyens de fermeture correspondants, lesdits moyens étant configurés pour permettre un débit d'huile lorsque la pression dans le canal de commande (38) est supérieure à une pression P2.

## Patentansprüche

1. System für die Ölversorgung einer Turbomaschine (2 ; 102) mit:
- einem Tank (16 ; 116), der für die Aufnahme einer Ölmenge geeignet ist;
- einer Speisepumpe (26 ; 126 ; 127) für mindestens ein Organ der Turbomaschine, wobei die genannte Pumpe mit dem Tank (16 ; 116) und dem oder den genannten Organen kommuniziert;
- Verschlussmitteln (28 ; 128 ; 129) zum Abtrennen der Förderung der Speisepumpe (16 ; 126 ; 127) in Richtung auf das Organ oder die Organe, wenn die Drehzahl der Pumpe unterhalb einer Drehzahl R1 liegt;
**dadurch gekennzeichnet, dass** die Verschlussmittel hydraulisch stromaufwärts der Pumpe zwischen der genannten Pumpe und dem Tank angeordnet sind.

2. System nach Patentanspruch 1, **dadurch gekennzeichnet, dass** die Verschlussmittel ein Anti-Siphon-Ventil (28 ; 128 ; 129) beinhalten, das so konfiguriert ist, dass es sich schließt, wenn der Ansaugunterdruck der Speisepumpe (26 ; 126 ; 127) unterhalb einer vorgegebenen Schwelle liegt.

3. System nach einem der Patentansprüche 1 bis 2, **dadurch gekennzeichnet, dass** die Verschlussmittel (28) im Tank (16) untergebracht sind.

4. System nach einem der Patentansprüche 1 bis 3, **dadurch gekennzeichnet, dass** die Verschlussmittel (28 ; 128 ; 129) mechanisch durch den Ansaugunterdruck der Speisepumpe (26 ; 126 ; 127) und vorzugsweise auch durch den Druck im Tank (16 ; 116) betätigt werden.

5. System nach einem der Patentansprüche 1 bis 4, **dadurch gekennzeichnet, dass** die Pumpe eine erste Pumpe (126) ist, die Verschlussmittel erste Verschlussmittel (128) sind; wobei das System außerdem eine zweite Speisepumpe (127) beinhaltet, deren mechanischer Antrieb mit demjenigen der ersten Pumpe (126) gekoppelt ist und die mit dem Tank (116) und einem oder mehreren weiteren Organen der Turbomaschine kommuniziert, und zweite Verschlussmittel (129) für die Abtrennung der Förderung der zweiten Speisepumpe (127), wenn die Drehzahl der Pumpe unter eine Drehzahl R2 fällt, wobei die genannten Mittel stromaufwärts der genannten Pumpe angeordnet sind und die Drehzahl R2 von der Drehzahl R1 abweicht.

6. System nach Patentanspruch 5, **dadurch gekennzeichnet, dass** die Drehzahlen R1 und R2 um mehr als 5%, vorzugsweise um mehr als 10%, noch bevorzugter um mehr als 30% und noch bevorzugter um mehr als 100% voneinander abweichen.

7. System nach einem der Patentansprüche 1 bis 6, **dadurch gekennzeichnet, dass** die Speisepumpe(n) (26 ; 126 ; 127) eine interne Leckage aufweisen, die in der Lage ist, ihren Ansaugunterdruck zu reduzieren, wenn die entsprechenden Verschlussmittel (28 ; 128 ; 129) die Förderung der Pumpe abtrennen.

8. System nach einem der Patentansprüche 1 bis 7, **dadurch gekennzeichnet, dass** es eine Steuerleitung (36) beinhaltet, die den Ausgang der Speisepumpe oder einer der Speisepumpen (26) mit den entsprechenden Verschlussmitteln (28) verbindet, so dass eine Ölförderung ermöglicht wird, wenn der Ausgangsdruck der genannten Pumpe einen Druck P1 überschreitet.

9. Turboreaktor (2 ; 120) mit Organen und einem Ölversorgungssystem, **dadurch gekennzeichnet, dass** das Versorgungssystem einem der Patentansprüche 1 bis 8 entspricht.

10. Turboreaktor (2) nach Patentanspruch 9, **dadurch gekennzeichnet, dass** er einen Fan (18) beinhaltet, dessen Antrieb mit dem der Speisepumpe oder einer der Speisepumpen (26) gekoppelt ist, wobei sich der Lüfter (18) dreht und die genannte Speisepumpe (26) mit einer Drehzahl R3 rotierend antreibt, wenn sich der Turboreaktor im Flug befindet und nicht mit Kraftstoff versorgt wird, entsprechend einer Autorotation im Flug, wobei die Drehzahl R3 geringer ist, als die Drehzahl R1, so dass die Speisepumpe(n) nicht fördern, wenn sich der Turboreaktor in Autorotation im Flug befindet.

11. Turboreaktor (102) nach Patentanspruch 9, wobei das System Patentanspruch 5 entspricht, **dadurch gekennzeichnet, dass** er einem Fan (118) beinhaltet, dessen Antrieb mit demjenigen der ersten und zweiten Speisepumpe (126 ; 127) gekoppelt ist, wobei sich der Fan (118) dreht und die erste Speisepumpe (126) mit einer Drehzahl R3 der ersten Speisepumpe rotierend antreibt, wenn sich der Turboreaktor im Flug befindet und nicht mit Kraftstoff versorgt wird, entsprechend einer Autorotation im Flug, wobei die Drehzahl R3 zwischen den Drehzahlen R1 und R2 liegt, so dass eine der beiden ersten und zweiten Speisepumpen in Richtung auf ihre entsprechenden Organe fördert und die andere der genannten Pumpen nicht fördert, wenn sich der Turboreaktor im Autorotationsmodus im Flug befindet.

12. Turboreaktor (2 ; 102) nach einem der Patentansprüche 10 und 11, **dadurch gekennzeichnet, dass** die Antriebsdrehzahl R3 um 50%, vorzugsweise 30%, noch bevorzugter um 10% unter der Antriebsdrehzahl befindet, wenn sich der Turboreaktor mit Nennbetriebszahl dreht.

13. Turboreaktor (2; 102) nach einem der Patentansprüche 9 bis 12, **dadurch gekennzeichnet, dass** das Organ oder die Organe, die anhand der Speisepumpe(n) (26 ; 126 ; 127) versorgt werden, mindestens einen Raum für das Schmieren der Rotorlager beinhalten.

14. Turboreaktor (2 ; 102) nach einem der Patentansprüche 9 bis 13, **dadurch gekennzeichnet, dass** das Ölversorgungssystem außerdem eine Rückgewinnungsschleife (30 ; 130) für das Öl von einem oder mindestens einem der Organe beinhaltet, wobei die Schleife mit einer Rückgewinnungspumpe (32 ; 132) ausgerüstet ist, deren Antrieb vorzugsweise mit demjenigen der Speisepumpe(n) gekoppelt ist.

15. Turboreaktor (2) nach Patentanspruch 14, **dadurch gekennzeichnet, dass** das Ölversorgungssystem einen Steuerkanal (38) beinhaltet, der die Rückgewinnungsschleife (39) unterhalb der Rückgewinnungspumpe mit den entsprechenden Verschlussmitteln verbindet, wobei die genannten Mittel so konfiguriert sind, dass ein Öldurchsatz ermöglicht wird, wenn der Druck im Steuerkanal (38) über einem Druck P2 liegt.

## Claims

1. Oil feed system for a turbomachine (2, 102), comprising:
- a tank (16,116) designed to contain a volume of oil;
- a feed pump (26, 126, 127) for at least one device on the engine, the said pump being connected to the tank (16, 116) and the said one or more devices;
- means of closure (28, 128, 129) for the flow from the feed pump (26, 126, 127) to the device or devices when the pump speed is less than a speed R1;
wherein the means of closure are located hydraulically upstream of the pump, between the said pump and the tank.

2. System in accordance with Claim 1, wherein the means of closure comprises an anti-siphon valve (28, 128, 129) designed to close when the suction negative pressure of the feed pump (26, 126, 127) is lower than a given threshold.

3. System in accordance with Claims 1 to 2, wherein the means of closure (28) are located in the tank (16).

4. System in accordance with one of Claims 1 to 3, wherein the means of closure (28, 128, 129) are mechanically controlled by the suction negative pressure of the feed pump (26, 126, 127) and preferably also by the pressure in the tank (16, 116).

5. System in accordance with one of Claims 1 to 4, wherein the pump is a first pump (126), the means of closure are the first means of closure (128), the system further comprising a second feed pump (127) for which the mechanical drive is coupled to that of the first pump (126), and which is connected to the tank and one or more other devices in the turbomachine, second means of closure (129) of the discharge from the second feed pump (127) when the speed of the first feed pump falls below a speed R2, the said means being located upstream of the said pump, speed R2 being different from speed R1.

6. System in accordance with Claim 5, wherein speeds R1 and R2 differ by greater than 5%, more preferably by greater than 10%, more preferably by greeter than 30%, even more preferably by greater than 100%.

7. System in accordance with one of Claims 1 to 6, wherein the feed pump(s) (26, 126, 127) have internal bypasses designed to reduce their suction negative pressure when the corresponding means of closure (28, 128, 129) cut the flow.

8. System in accordance with one of Claims 1 to 7, wherein it comprises a control channel (36) connecting the outlet to the or one of the feed pump(s) (26) to the corresponding means of closure (28) so as to allow a flow of oil when the discharge pressure of the said pump exceeds a pressure P1.

9. Turbojet (2, 102) comprising devices and an oil feed system, wherein the feed system is accordance with of any one of Claims 1 to 8.

10. Turbojet (2) in accordance with Claim 9, wherein it comprises a fan (18) the drive from which is coupled to that of the or one of the feed pumps (26), the rotating fan (18) driving the said feed pump at a speed R3 when the turbojet is in flight and is not being supplied with fuel, corresponding to an autorotation flight mode, the speed R3 being less than the speed R1, so that the feed pump(s) do not discharge when the turbojet is in autorotation flight mode.

11. Turbojet (102) in accordance with Claim 9, the system being in accordance with Claim 5, wherein it comprises a fan (118) which is coupled to drive the first and second feed pumps (126, 127), the fan (118) rotating and driving in rotation the first feed pump (126) to a speed R3 of the first feed pump when the turbojet is in flight and is not being supplied with fuel, corresponding to an autorotation flight mode, the speed R3 being between the speeds R1 and R2, such that one of the first and second feed pumps discharges to its corresponding device(s) and the other of the said pumps does not discharge when the turbojet is in autorotation flight mode.

12. Turbojet (2, 102) in accordance with one of Claims 10 and 11, wherein the drive speed R3 is less than 50%, preferably 30%, more preferably 10% of the drive speed when the turbojet is at its rated operational speed.

13. Turbojet (2, 102) in accordance with one of Claims 9 to 12, wherein the device or devices fed by the feed pump(s) (26, 126, 127) comprises at least one lubricating chamber for a rotor bearing.

14. Turbojet (2, 102) in accordance with one of Claims 9 to 13, wherein the oil feed system further comprises an oil recovery loop (30, 130) for at least one of the devices, the loop being provided with a scavenge pump (32, 132) for which the drive is preferably coupled to the drive for the feed pump(s).

15. Turbojet (2) in accordance with Claim 14, wherein the oil feed system comprises a control pipe (38) connecting the recovery loop (30) downstream of the recovery pump with corresponding means of closure, the said means being designed to allow a flow of oil when the pressure in the control channel (38) is greater than a pressure P2.
